(19) Europäisches Patentamt / European Patent Office / Office européen des brevets

(11) **EP 2 590 075 A1**

(12) **EUROPEAN PATENT APPLICATION**

(43) Date of publication:
08.05.2013 Bulletin 2013/19

(51) Int Cl.:
*G06F 9/45* (2006.01)

(21) Application number: 11187510.0

(22) Date of filing: 02.11.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Siemens Aktiengesellschaft
80333 München (DE)

(72) Inventors:
• Antony, Elvis
560030 Bangalore (IN)
• Thakur, Prashant
110034 Delhi (IN)

(54) **A system and a method for statically processing a piece of assembly level code**

(57) A system (1) for statically processing a piece of assembly level code (2) including a string segregator (3) for receiving the piece of assembly level code (2) and segregating the piece of code (2) into a set (8) of strings (4), and an string analyzer (5) for receiving the set (8) of strings (4) and a user declaration data (6) comprising values for defining variables of the piece of code (2), processing the strings (4) by using the user declaration data (6) to provide an output (7) related to a deficiency in the piece of assembly level code (2), wherein the string (4) is a smallest element in the piece of assembly level code (2) used by a compiler to execute the assembly level piece of code (2) in an hardware environment.

FIG 1

EP 2 590 075 A1

**Description**

The invention relates to processing a piece of assembly level code. More specifically, the invention relates to processing the piece of assembly level code statically without executing the piece of assembly level code to determine deficiencies in the piece of assembly level code.

A piece of assembly level code is a low-level programming language for hardware environments like computers, microprocessors, microcontrollers, and other programmable devices. The piece of assembly level code is a symbolic representation of low level codes and other constants needed to program a given CPU architecture. On compilation of each statement of the high level codes, multiple strings of the assembly level codes are generated.

In comparison to debugging the piece of assembly level code with respect to corresponding high level code, debugging the assembly piece of code is an enormous task. One way to debug the assembly piece of code is to manually scan and analyze each of the strings of the assembly level codes. However, such scanning is tiring and human error prone. Another possible way to debug the assembly piece of code is by employing trial and error method of commenting corresponding lines of the high level code. Such a way still employs lot of human efforts and still is quite human error prone.

One way for debugging the assembly piece of code is to debug the strings of the assembly piece of code by using an assembly language debugger by debugging the assembly piece of code by executing the assembly piece of code in real time on a hardware environment. Such a debugger requires hardware environment physically and also such debuggers only displays values in CPU registers of the hardware environment and do not point over the defects in the strings of the assembly piece of code.

The object of the invention is to statically process a piece of assembly level code to detect defects in strings of the assembly level piece of code.

The object of the invention is achieved by a system of claim 1 and method of claim 9.

According to an embodiment of the invention, the system includes a string segregator to receive and process a piece of assembly level code into a set of strings. The string is a smallest element in the piece of assembly level code used by a compiler to execute the assembly piece of code in a hardware environment. The set of strings are further received by a string analyzer along with a user declaration data to process the strings using the user declaration data to provide an output. The string analyzer categorizes the strings on a basis of presence of operands in the strings before processing them along with the user declaration data. Such processing of the piece of assembly level code virtually executes the strings having presence of the operand to identify defects in each strings of the piece of code. This helps in decreasing the processing time of the strings by string analyzer.

According to another embodiment, the string analyzer processes the string having presence of operand into an intermediate data representing a combination of a location of a memory block of the hardware environment where the piece of assembly level code is adapted to be executed, a starting address of the memory block, a range of memory address of the memory block and the operation, wherein the location of the memory block represents logical locality of the memory block and memory address represents an identifier to the locality. This converts the strings into a hardware environment independent format which makes the system utilizable across all hardware environments.

According to an exemplary embodiment, the strings having presence of operand are categorized in either of load/store string, jump string or shift string. This categorization helps the string analyzer to provide adequate hardware environment resources like computation power, memory, etc for each kind of strings.

According to one embodiment, the system includes a user interface adapted to receive the assembly level piece of code and the user declaration data from a user and to provide the output to the user. This helps for real-time identification of the piece of code by a user with a possibility to interfere in the piece of code processing by providing a facility to change the user declaration data or the piece of code at the user's will.

According to another embodiment, the system includes a controlling interface to provide control for processing the string. This provides control to the user to process the strings in stretch of number of strings, or on different time intervals, or any other possible way on wishes of the user as per the options provided by the controlling interface.

According to yet another embodiment, the string analyzer generates a system declaration data while processing the string and processes a subsequent string by using the system declaration data and provides the output. This helps to validate the piece of code for the proper functioning of temporary resources allocated during the execution of the piece of code in the hardware environment.

According to an exemplary embodiment, the system includes a virtual CPU register which receives an updated value from the string analyzer based on processing of the string and updates the virtual CPU register by storing the updated value into the virtual CPU register, wherein the virtual CPU register is logical representation of a CPU register of the hardware environment where the piece of assembly level code is adapted to be executed. This provides for a simulation of the execution of the piece of code in the hardware environment by providing virtual resources to the system equivalent to the CPU registers in the hardware environment.

The above-mentioned and other features of the invention will now be addressed with reference to the drawings of a preferred embodiment of the system for processing the piece of code statically. The illustrated embodiments of the charger and the charging system are intended to illustrate, but not limit the invention. The drawings contain the following figures, in which like numbers refers to like parts, throughout the description and drawings.

FIG 1 shows a schematic representation of a system for processing a piece of assembly level code.

FIG 2 shows a schematic processing of strings of assembly level code by a string analyzer.

FIG 3 shows a tree representation of processing of a piece of assembly level code which breaks down a hardware environment on execution.

FIG 4 shows a tree representation of processing of a piece of assembly level code which uses unnecessary temporary memory of a hardware environment on execution.

FIG 5 shows a tree representation of processing of a piece of assembly level code where temporary memory allocated while execution in a hardware environment is not reused.

FIG 6 shows a visual interface of the system for processing a piece of assembly level code.

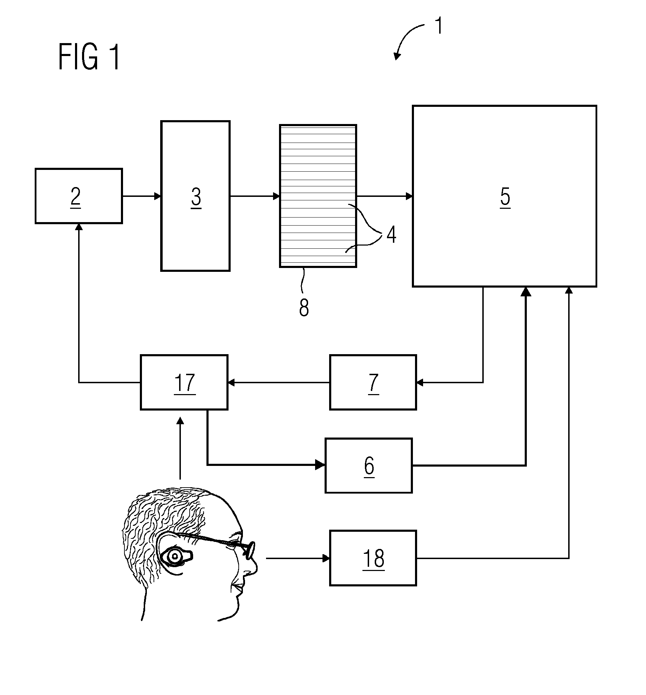

FIG 1 illustrates a system 1 for processing the piece of assembly level code 2 having a string segregator 3 and a string analyzer 5 to cooperate together to analyze each string 4 of the piece of assembly level code 2 to provide an output 7 which represents to a defect in the piece of assembly level code 2.

An example of the assembly piece of code 2 is:

| | |
|---|---|
| L W 4 | (A) |
| L 2 | (B) |
| + I | (C) |
| L W 6 | (D) |
| * I | (E) |
| L W 2 | (F) |
| - I | (G) |
| T W 0 | (H) |

The string 4 is a smallest element in the piece of assembly level code 2 used by a compiler to execute the assembly piece of code 2 in a hardware environment. In reference to the above example, each of the line (A), (B), (C), (D), (E), (F), (G) and (H) is the string 4,

The string segregator 3 receives the piece of assembly level code 2 from a user via a user interface 17. On receiving the piece of assembly level code 2, the string segregator 3 processes the assembly piece of code 2 by segregating it into a set 8 of strings 4 such that if the strings 4 are logically connected than the strings 4 would perform functioning equivalent to the assembly piece of code 2. Alternatively, the segregation can be one string at a time and not as the set 8 and each string 4 segregated can be sent to the string analyzer 5 to process the string 4. Yet alternatively, the segregation of the piece of assembly level code 2 can be controlled by a user to segregate the piece of code 2 either on various time intervals or on a logical partition basis or any other possible way which can allow the user to control the segregation of the strings 4. The string segregator 3 is a computerized data processor which has an ability to receive data and process the data like the assembly piece of code 2. Alternatively, a general purpose central processing unit in a personal computer can be adapted to receive the assembly piece of code 2 and segregate the assembly piece of code 2 into the strings 4.

The string analyzer 5 receives the set (8) of strings 4 and user declaration data 6 comprising values for defining variables of the piece of code 2. On receiving the strings 4 and user declaration data 6, the string analyzer 5 processes the strings 4 by using the user declaration data 6 to provide an output 7 related to a deficiency in the piece of assembly code 2. The processing of the strings 4 involves simulating the hardware environment and pass the user declaration data 6 to the variables of the strings 4 to monitor functioning of the simulated hardware environment and if a defect occurs in the simulated hardware environment than the processor throws the output 7. The string analyzer 5 is a computerized data processor which has an ability to receive data and process the data like the strings 4 and the user declaration data 6. Alternatively, a general purpose central processing unit in a personal computer can be adapted to receive the strings 4 and user declaration data 6, and process the strings 4 to provide the output 7.

The system 1 also includes the user interface 17 to allow user to input the piece of assembly level code 2 and a user declaration data 6 at his will. The user interface 17 can be any visual display unit or a graphical interface or a text editor or any other kind of interface which allows the user to provide texts like the piece of assembly level code 2 and a user declaration data 6 at his will as input to the system 1. The system 1 also provides the output 7 to the user which may be highlighting of the defects in strings 4 of the piece of assembly level code 2, or representations of the defects to be occurred while executing the piece of code 2 in the hardware environment or even may include further suggestions to rectify the defects, or combination thereof.

The system 1 also includes a controlling interface 18 to control processing of the piece of assembly level code 2 to get the piece of code 2 processed in a defined or random time interval, or even in different tranches of number of strings 4 or amount of memory used by the piece of code 2 while being processed or while being stored. The control can be provided in any metrics on the basis of which processing of the piece of assembly level code 2 can be interfered by the user.

The user declaration data 6 comprises values which defines variables in the assembly piece of code 2. The user declaration data 6 comprises of atleast variable name, data type and value to the variable name. Alternatively, the user declaration data 6 also comprises of information like start address, end address, name, size, etc in reference to a temporary memory being used during the execution of the piece of the assembly level code 2 in the hardware environment.

The output 7 relates to a deficiency in the piece of assembly level code 2. Here the deficiency referred can be breakdown of the hardware environment, or usage of an avoidable temporary memory, or non re-usage of temporary memory already used, or any such deficiency occurring during execution of the piece of assembly level code 2, or combination thereof. The output 7 may also refer to an optimization suggestion for the user to optimize the piece of assembly level code 2. Example of the output 7 as optimization suggestion can be illustrated through the below said piece of assembly level code 2:

```
L W 2
OPN DB100
L DBW 0
+ I
OPN DB100
L DBW 2
- I
TWO 0
```

When the above stated piece of assembly level piece of code 2 is processed through the system 1, the string analyzer 5 provides the output 7 to optimize the piece of assembly level code 2 by removing "OPN DB 100" string 4 as the DB 100 is already open.

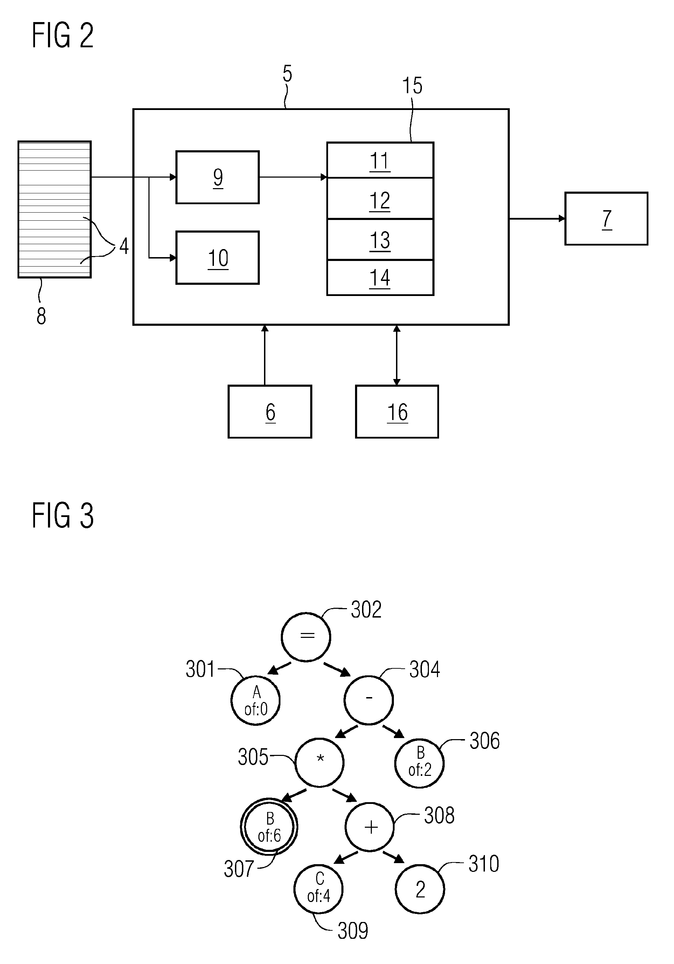

While discussing FIG 2, references from FIG 1 will be used. According to FIG 2, the string analyzer 5 processes the strings 4 by categorizing each of the strings into the strings 9 having presence of operand and the strings 10 having absence of the operand and than, the string analyzer 5 processes the strings 9 having presence of operand into an intermediate data 15 representing a combination of a location 11 of a memory block of the hardware environment where the piece of assembly level code 2 is adapted to be executed, a starting address 12 of the memory block, a range 13 of memory address of the memory block and an operation 14, wherein the location 11 of the memory block represents logical locality of the memory block and memory address represents an identifier to the locality. For example, the intermediate data 15 for a string "L LW 20" is:

```
Operation=IL_OP_L
Operand.MemoryArea=IL_MA_STACK
Operand.Size=IL_S_WORD
```

```
Operand.BitOffset=160
```

FIG 2 further illustrates generation and usage of a system declaration data 16. While analyzing one of the strings 4, the string analyzer 5 is adapted to generate the system declaration data 16 while processing the string 4 and to process a subsequent string 4 by using the system declaration data 16 to provide the output 7. Alternatively, the string analyzer 5 further categorizes the strings 4 having presence of operand in either of load/store string, jump string or shift string.

While discussing FIG 3, FIG 4 and FIG 5, references will be made to the FIG 1 and FIG 2.

FIG 3 illustrates a tree representation of processing of a piece of assembly level code 2 which breaks down a hardware environment on execution. The piece of assembly level code 2 for which the tree representation is provided follows:

```
L W 4
L 2
+ I
L W 6
* I
L W 2
- I
TWO 0
```

The above mentioned piece of code 2 is represented in a tree format having nodes from nodes 301 to 310, wherein 302, 304, 305, 308 and 310 are operation nodes, and 301, 306, 307 and 309 are operand nodes. In simplified terms, the piece of code 2 represents mathematical calculation of

$$A = B(C+2) - B$$

Wherein A, B and C are integer data types. Thus the tree represents that offset of A as 0, offset of B as 2 and offset of C as 4. When the above stated assembly piece of code 2 is put into the system 1 to identify defect in the assembly piece of code 2, the string analyzer 5 provides the output 7 with breakdown of the hardware environment on execution of the piece of code 2, as the node 307 shows wrong offset of B to be 6.

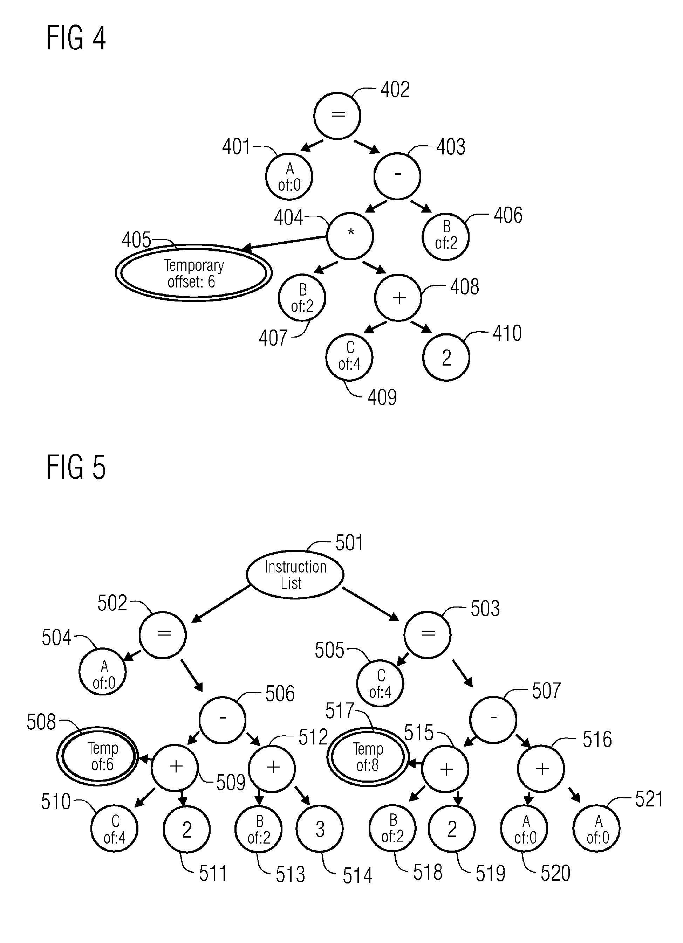

FIG 4 illustrates a tree representation of processing of a piece of assembly level code 2 which uses unnecessary temporary memory of a hardware environment on execution. The piece of assembly level code 2 for which the tree representation is provided follows:

```
L W 4

L 2
```

```
+ I

L W 2

* I

T W 6

L W 2

L W 6

- I

TWO 0
```

The above mentioned piece of code 2 is represented in a tree format having nodes from nodes 401 to 410, wherein 402, 403, 404 and 408 are operation nodes, and 401, 406, 405, 407, 409 and 410 are operand nodes. In simplified terms, the piece of code 2 represents mathematical calculation of

$$A = B(C+2) - B$$

Wherein A, B and C are integer data types. Thus the tree represents that offset of A as 0, offset of B as 2 and offset of C as 4. When the above stated assembly piece of code 2 is put into the system 1 to identify defect in the assembly piece of code 2, the string analyzer 5 provides the output 7 with unnecessary temporary memory location at the node 405 on execution of the piece of code 2.

FIG 5 illustrates a tree representation f processing of a piece of assembly level code 2 where temporary memory allocated while execution in a hardware environment is not reused. The piece of assembly level code 2 for which the tree representation is provided follows:

```
L W 4
L 2
+I
T W 6
L W 2
L 3
+I
L W 6
- I
TWO 0
L W 2
L 2
+ I
T W 8
L W 0
L W 0
+ I
```

```
L W 8
- I
T W 4
```

The above mentioned piece of code 2 is represented in a tree format having nodes from nodes 501 to 521, wherein 502, 503, 506, 507, 515 and 516 are operation nodes, and 504, 505, 508, 510, 511, 513, 514, 517, 518, 519, 520 and 521 are operand nodes. In simplified terms, the piece of code 2 represents mathematical calculation of

$$A = (C+2) - (B+3),$$

and

$$C = (B+2) - (A+A)$$

Wherein A, B and C are integer data types. Thus the tree represents that offset of A as 0, offset of B as 2 and offset of C as 4. When the above stated assembly piece of code 2 is put into the system 1 to identify defect in the assembly piece of code 2, the string analyzer 5 provides the output 7 with non re-use of temporary memory allocated at the nodes 508 and 517 on execution of the piece of code 2.

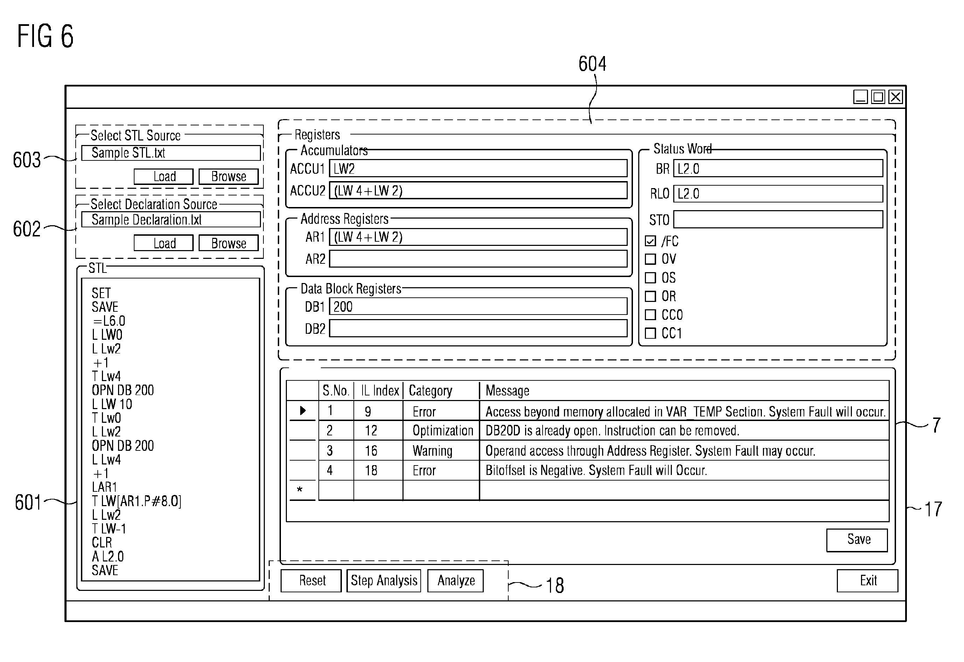

While explaining FIG 6, references will be made to FIG 1. FIG 6 illustrates a visual interface 17 of the system 1 for processing a piece of assembly level code 2 having section 603 for inputting the assembly piece of code 2, section 602 for inputting the user declaration data 6, section 601 for displaying the assembly piece of code 2 inputted by a user using the section 603, the controlling interface 18 for controlling the analysis of the piece of code 2 either one string at a time or the set 8 of string 4 as a whole, the output 7 being displayed, section 604 to represent virtual CPU registers with values in hold by each of the registers during execution of the piece of code 2.

The virtual CPU registers receives an updated value from the string analyzer 5 based on processing of the string 4 and updates the virtual CPU register by storing the updated value, wherein the virtual CPU register is logical representation of a CPU register of the hardware environment where the piece of assembly level code 2 is adapted to be executed. The section 603 shows various virtual CPU registers as accumulators ACCU 1 and ACCU 2 which are used to store intermediate results, address registers AR1 and AR2 which are used to store the memory addresses of data blocks from which a data will be fetched to the hardware environment or the address to which data will be sent and stored, data block registers DB1 and DB2 stores number of data blocks currently being processed, status register having 8 bits each of which are represented by BR, RLO, STA, FC, OV, OS, OR, CC0 and CC1. The status registers are used to determine health of the hardware environment

## Claims

1. A system (1) for statically processing a piece of assembly level code (2) comprising:

   - a string segregator (3) adapted to receive the piece of assembly level code (2) and segregate the piece of code (2) into a set (8) of strings (4),
   - an string analyzer (5) adapted to receive the set (8) of strings (4) and a user declaration data (6) comprising values for defining variables of the piece of code (2), to process the strings (4) by using the user declaration data (6) to provide an output (7) related to a deficiency in the piece of assembly level code (2), wherein the string (4) is a smallest element in the piece of assembly level code (2) used by a compiler to execute the assembly level piece of code (2) in an hardware environment.

2. The system (1) according to claim 1, wherein string analyzer (5) is adapted to categorize the string (4) into a string (9) having a presence of the operand or a string (10) having an absence of the operand.

3. The system (1) according to the claim 1, wherein the string analyzer (5) processes the string (9) having presence of operand into an intermediate data (15) representing a combination of a location (11) of a memory block of the hardware environment where the piece of assembly level code (2) is adapted to be executed, a starting address (12) of the memory block, a range of memory address (13) of the memory block and a operation (14), wherein the location of the memory block represents logical locality of the memory block and memory address represents an identifier to the locality.

4. The system (1) according to any of the claims 1 or 2, wherein the strings (9) having presence of operand are categorized in either of load/store string, jump string or shift string.

5. The system (1) according to any of the claims 1 to 4, comprising:

   - an user interface (17) adapted to receive the assembly level piece of code (2) and the user declaration data (6) from a user and to provide the output (7) to the user.

6. The system (1) according to any of the claims 1 to 5 comprising:

   - a controlling interface (18) which is adapted to provide control for processing the strings (4).

7. The system (1) according to any of the claims 1 to 7, wherein the string analyzer (5) is adapted to generate a system declaration data (16) while processing the string (4) and to process a subsequent string (4) by using the system declaration data (16) to provide the output (7).

8. The system (1) according to any of the claims 1 to 7 comprising:

   - a virtual CPU register adapted to receive an updated value from the string analyzer (5) based on processing of the string (4) and to update the virtual CPU register by storing the updated value into the virtual CPU register, wherein the virtual CPU register is logical representation of a CPU register of the hardware environment where the piece of assembly level code (2) is adapted to be executed.

9. A method for statically processing a piece of assembly level code (2) comprising:

   - receiving and segregating the piece of assembly level code (2) into a set (8) of strings (4) by a string segregator (3),
   - receiving the set (8) of strings (4) from the string segregator (3) and a user declaration data (6) by a string analyzer (5),
   - processing the strings (4) by the string analyzer (5) using the user declaration data (6) to provide an output (7) related to a deficiency in the piece of assembly level code (2), wherein the user declaration data (6) comprising values for defining variables of the piece of code (2) by a string analyzer and wherein the string (4) is a smallest element in the piece of assembly level code (2) used by a compiler to execute the assembly level piece of code (2) in an hardware environment.

10. The method according to claim 9, comprising:

    - categorizing the string (4) by the string analyzer (5) into a string (9) having a presence of the operand or a string (10) having an absence of the operand.

11. The method according to any of the claims 9 or 10, comprising:

    - processing the string (9) having presence of operand by the string analyzer (5) into an intermediate data (15) representing a combination of a location (11) of a memory block of the hardware environment where the piece of assembly level code (2) is adapted to be executed, a starting address (12) of the memory block, a range of memory address (13) of the memory block and a operation (14), wherein the location of the memory block represents logical locality of the memory block and memory address represents an identifier to the locality.

12. The method according to any of the claims from 9 to 11,

    - providing control for processing the strings (4) by a controlling interface (18).

13. The method according to any of the claims from 9 to 12,

    - generating a system declaration data (16) while processing the string (4) by the string analyzer (5), and
    - processing a subsequent string (4) by the string analyzer (5) using the system declaration data (16) to provide the output (7).

14. The method according to any of the claims from 9 to 13, comprising:

    - receiving an updated value from the string analyzer (5) by a virtual CPU register based on processing of the string (4), and
    - update the virtual CPU register by storing the updated value into the virtual CPU register, wherein the virtual CPU register is logical representation of a CPU register of the hardware environment where the piece of assembly level code (2) is adapted to be executed

FIG 1

FIG 2

FIG 3

FIG 4

FIG 5

# FIG 6

**604**

**Select STL Source** — 603
Sample STL.txt
[Load] [Browse]

**Select Declaration Source** — 602
Sample Declaration.txt
[Load] [Browse]

**STL** — 601
```
SET
SAVE
=L6.0
L LW0
L Lw2
+1
T Lw4
OPN DB 200
L LW 10
T Lw0
L Lw2
OPN DB 200
L Lw4
+1
LAR1
T LW[AR1.P#8.0]
L Lw2
T LW-1
CLR
A L2.0
SAVE
```

**Registers**

**Accumulators**
ACCU1 | LW2
ACCU2 | (LW 4 + LW 2)

**Address Registers**
AR1 | (LW 4 + LW 2)
AR2 |

**Data Block Registers**
DB1 | 200
DB2 |

**Status Word**
BR | L2.0
RLO | L2.0
STO |
☑ /FC
☐ OV
☐ OS
☐ OR
☐ CC0
☐ CC1

| | S.No. | IL Index | Category | Message |
|---|---|---|---|---|
| ▶ | 1 | 9 | Error | Access beyond memory allocated in VAR_TEMP Section. System Fault will occur. |
| | 2 | 12 | Optimization | DB20D is already open. Instruction can be removed. |
| | 3 | 16 | Warning | Operand access through Address Register. System Fault may occur. |
| | 4 | 18 | Error | Bitoffset is Negative. System Fault will Occur. |
| * | | | | |

— 7

— 17

[Save]

[Reset] [Step Analysis] [Analyze] — 18

[Exit]

EP 2 590 075 A1

| | Europäisches Patentamt European Patent Office Office européen des brevets | **EUROPEAN SEARCH REPORT** | Application Number EP 11 18 7510 |
| :--- | :--- | :--- | :--- |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| :--- | :--- | :--- | :--- |
| X | DAWN SONG ET AL: "BitBlaze: A New Approach to Computer Security via Binary Analysis", 16 December 2008 (2008-12-16), INFORMATION SYSTEMS SECURITY, SPRINGER BERLIN HEIDELBERG, BERLIN, HEIDELBERG, PAGE(S) 1 - 25, XP019112950, ISBN: 978-3-540-89861-0 * the whole document * * figures 2,3a,3,b,3c,4 * * paragraph [03.1] - paragraph [03.3] * ----- | 1-13 | INV. G06F9/45 |
| X | Anonymous: "Parsing", Wikipedia, the free encyclopedia , 31 October 2011 (2011-10-31), pages 1-6, XP002673764, Retrieved from the Internet: URL:http://en.wikipedia.org/w/index.php?title=Parsing&oldid=458258592 [retrieved on 2012-04-11] * the whole document * ----- | 1,9 | |
| | | | TECHNICAL FIELDS SEARCHED (IPC) G06F |

The present search report has been drawn up for all claims

| Place of search | Date of completion of the search | Examiner |
| :--- | :--- | :--- |
| The Hague | 13 April 2012 | Dieben, Marc |

EPO FORM 1503 03.82 (P04C01)